(19) Europäisches Patentamt
European Patent Office
Office européen des brevets

(11) **EP 4 386 613 A1**

(12) **EUROPEAN PATENT APPLICATION**
published in accordance with Art. 153(4) EPC

(43) Date of publication:
**19.06.2024 Bulletin 2024/25**

(21) Application number: **22855482.0**

(22) Date of filing: **10.08.2022**

(51) International Patent Classification (IPC):
**G06F 30/23** (2020.01)

(52) Cooperative Patent Classification (CPC):
**G06F 16/25; G06F 30/17; G06F 30/23;
G06F 2119/14**

(86) International application number:
**PCT/CN2022/111547**

(87) International publication number:
**WO 2023/016502 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.08.2021 CN 202110925621**

(71) Applicant: **Beijing CHJ Information Technology
Co., Ltd.
Beijing 101399 (CN)**

(72) Inventors:
• **YUAN, Baoguo
Beijing 101399 (CN)**
• **HUANG, Hao
Beijing 101399 (CN)**

(74) Representative: **advotec.
Patent- und Rechtsanwaltspartnerschaft
Tappe mbB
Widenmayerstraße 4
80538 München (DE)**

(54) **METHOD AND APPARATUS FOR DETERMINING MATERIAL CONSTITUTIVE MODEL,
ELECTRONIC DEVICE, AND MEDIUM**

(57)    A method and apparatus for determining a material constitutive model, an electronic device, and a medium. The method comprises: determining a reference curve of a material sample from stress-strain curves in an existing material database (S110), the reference curve being a stress-strain curve, in the material database, having a high degree of matching with the material sample; performing scaling transformation on the reference curve to obtain a stress-strain curve corresponding to the material sample (S 120); and determining a constitutive model of the material sample according to the stress-strain curve corresponding to the material sample (S130).

FIG. 1

**Description**

## CROSS REFERENCE TO RELATED APPLICATIONS

This application is based on and claims the priority to Chinese Patent Application No. 202110925621.0, filed on August 12, 2021, the entire contents of which are incorporated herein by reference.

## TECHNICAL FIELD

The disclosure relates to a technical field of mechanical properties of materials, in particular to a method and an apparatus for determining a material constitutive model, an electronic device, and a medium.

## BACKGROUND

A comfort level of a seat is often measured by a body pressure distribution, which is one of the important methods widely used in engineering.

In the related art, the simulation of the body pressure distribution is mainly carried out under a condition that a constitutive model of a sponge foam material is very certain, which means that the constitutive model of the sponge foam material used in the simulation needs to be defined by a testing curve of sponge foam specimens. In the simulation of the body pressure distribution, which mainly involves deformation in compression direction, it is usually necessary to input stress-strain curves of material specimens under unidirectional compression to fit parameters of the material constitutive model (strain energy function).

However, traditional methods require production of sponge foam specimens with different hardness, and performing compression tests to obtain the stress-strain curve of the material, based on which the constitutive model of the sponge foam material used for the simulation is defined. However, this method is time-consuming and labor-intensive, and is difficult to conveniently and quickly construct the constitutive model of sponge material.

## SUMMARY

In order to solve the above technical problems or at least partially solve the above technical problems, the disclosure provides a method and an apparatus for determining a material constitutive model, an electronic device, and a medium.

A first aspect of the disclosure provides a method for determining a material constitutive model, including:

determining a reference curve of a material specimen from stress-strain curves in an existing material database;
obtaining a stress-strain curve corresponding to the material specimen by performing scaling transformation on the reference curve; and
determining a constitutive model of the material specimen according to the stress-strain curve corresponding to the material specimen.

Optionally, determining the reference curve of the material specimen from the stress-strain curves in the existing material database includes:

obtaining preset values of indentation of the material specimen, in which the preset values include a preset strain value and a preset stress value, the preset strain value includes at least two strain values, the preset stress value includes at least two stress values, each preset strain value corresponds to one preset stress value;
determining a root mean square error between at least two preset stress values and stress values corresponding to at least two preset strain values in each stress-strain curve from each stress-strain curve included in the existing material database, and obtaining a root mean square error corresponding to each stress-strain curve; and
determining a stress-strain curve corresponding to a minimum root mean square error as the reference curve of the material specimen.

Optionally, the preset strain value includes a first strain value, a second strain value, and a third strain value, the preset stress value includes a first stress value, a second stress value, and a third stress value, the first strain value corresponds to the first stress value, the second strain value corresponds to the second stress value, and the third strain value corresponds to the third stress value.

Optionally, obtaining the stress-strain curve corresponding to the material specimen by performing scaling transformation on the reference curve includes:

modifying a stress value corresponding to the first strain value in the reference curve to the first stress value, to obtain an adjusted reference curve;

performing a first scaling on the adjusted reference curve based on a first scaling factor, to obtain a first curve;

determining a target strain value in the first curve, in which the target strain value is used to indicate a change trend of the first curve;

performing a second scaling on a curve corresponding to strain values less than the target strain value in the first curve based on a second scaling factor, to obtain a second curve; and

performing a third scaling on a curve corresponding to strain values greater than the target strain value in the second curve based on a third scaling factor, to obtain the stress-strain curve corresponding to the material specimen.

Optionally, before performing the first scaling on the adjusted reference curve based on the first scaling factor, the method further includes:

obtaining a stress value corresponding to a strain value in the adjusted reference curve; and

determining the first scaling factor based on the strain value, the stress value corresponding to the strain value, the first strain value, and the first stress value.

Optionally, before performing the second scaling on the curve corresponding to strain values less than the target strain value in the first curve based on the second scaling factor, the method further includes:

obtaining a stress value corresponding to a strain value in the first curve; and

determining the second scaling factor based on the second strain value, the second stress value, the strain value in the first curve, and the stress value corresponding to the strain value in the first curve.

Optionally, before performing the third scaling on the curve corresponding to strain values greater than the target strain value in the second curve based on the third scaling factor, the method further includes:

determining the third scaling factor based on the strain value in the first curve, the stress value corresponding to the strain value in the first curve, the third strain value, the third stress value, the second strain value, and the second stress value.

Optionally, determining the constitutive model of the material specimen according to the stress-strain curve corresponding to the material specimen includes:

obtaining a parameter of the constitutive model corresponding to the material specimen by inputting the stress-strain curve corresponding to the material specimen into a finite element analysis software for fitting; and

constructing the constitutive model of the material specimen according to the parameter of the constitutive model corresponding to the material specimen.

A second aspect of the disclosure provides an apparatus for determining a material constitutive model, including:

a determining module, configured to determine a reference curve of a material specimen from stress-strain curves in an existing material database; and

a scaling module, configured to obtain a stress-strain curve corresponding to the material specimen by performing scaling transformation on the reference curve;

in which the determining module is further configured to determine a constitutive model of the material specimen according to the stress-strain curve corresponding to the material specimen.

Optionally, the determining module is configured to:

obtain preset values of indentation of the material specimen, in which the preset values include a preset strain value and a preset stress value, the preset strain value includes at least two strain values, the preset stress value includes at least two stress values, each preset strain value corresponds to one preset stress value;

determine a root mean square error between at least two preset stress values and stress values corresponding to at least two preset strain values in each stress-strain curve from each stress-strain curve included in the existing material database, and obtaining a root mean square error corresponding to each stress-strain curve; and

determine a stress-strain curve corresponding to a minimum root mean square error as the reference curve of the material specimen.

Optionally, the preset strain value includes a first strain value, a second strain value, and a third strain value, the preset stress value includes a first stress value, a second stress value, and a third stress value, the first strain value corresponds to the first stress value, the second strain value corresponds to the second stress value, and the third strain value corresponds to the third stress value.

Optionally, the scaling module includes: a modifying unit, a first scaling unit, a determining unit, a second scaling unit, and a third scaling unit.

The modifying unit is configured to modify a stress value corresponding to the first strain value in the reference curve to the first stress value, to obtain an adjusted reference curve.

The first scaling unit is configured to perform a first scaling on the adjusted reference curve based on a first scaling factor, to obtain a first curve.

The determining unit is configured to determine a target strain value in the first curve, in which the target strain value is used to indicate a change trend of the first curve.

The second scaling unit is configured to perform a second scaling on a curve corresponding to strain values less than the target strain value in the first curve based on a second scaling factor, to obtain a second curve.

The third scaling unit is configured to perform a third scaling on a curve corresponding to strain values greater than the target strain value in the second curve based on a third scaling factor, to obtain the stress-strain curve corresponding to the material specimen.

Optionally, the apparatus further includes an obtaining module.

The obtaining module is configured to obtain a stress value corresponding to a strain value in the adjusted reference curve.

The determining module is further configured to determine the first scaling factor based on the strain value, the stress value corresponding to the strain value, the first strain value, and the first stress value.

Optionally, the obtaining module is further configured to obtain a stress value corresponding to a strain value in the first curve; and

the determining module is further configured to determine the second scaling factor based on the second strain value, the second stress value, the strain value in the first curve, and the stress value corresponding to the strain value in the first curve.

Optionally, the determining module is further configured to determine the third scaling factor based on the strain value in the first curve, the stress value corresponding to the strain value in the first curve, the third strain value, the third stress value, the second strain value, and the second stress value.

Optionally, the determining module is configured to:

obtain a parameter of the constitutive model corresponding to the material specimen by inputting the stress-strain curve corresponding to the material specimen into a finite element analysis software for fitting; and
construct the constitutive model of the material specimen according to the parameter of the constitutive model corresponding to the material specimen.

A third aspect of the disclosure provides an electronic device, including:

one or more processors; and
a storage device, configured to store one or more programs.

When the one or more programs are executed by the one or more processors, the one or more processors are caused to implement the method for determining a material constitutive model according to any of embodiments of the disclosure.

A fourth aspect of the disclosure provides a computer-readable storage medium having a computer program stored thereon. When the computer program is executed by a processor, the method for determining a material constitutive model according to any of embodiments of the disclosure is performed.

The technical solution provided in the embodiments of the disclosure has the following advantages compared to the related art. The reference curve required by the material specimen is quickly obtained by determining the reference curve of the material specimen from the stress-strain curves in the existing material database, and the scaling transformation is performed on the reference curve to obtain the stress-strain curve corresponding to the material specimen. This eliminates the tedious process of obtaining the stress-strain curve of the material specimen through compression tests, and the constitutive model of the material specimen may be directly determined according to the stress-strain curve corresponding to the material specimen, which greatly saves a time period for determining the stress-strain curve for constructing the constitutive model of the material specimen, saving both time and effort. At the same time, the constitutive model of the material specimen is efficiently constructed.

**BRIEF DESCRIPTION OF THE DRAWINGS**

The accompanying drawings, which are incorporated in and constitute a part of the description, illustrate embodiments consistent with the disclosure and serve to explain the principle of the disclosure together with the description.

In order to explain the technical solution in embodiments of the disclosure or in the related art more clearly, a brief introduction is made below to the accompanying drawings required in the description of the embodiment or in the related art. Apparently, for those skilled in the art, other accompanying drawings may be obtained based on these accompanying drawings without paying creative labor.

FIG. 1 is a flowchart of a method for determining a material constitutive model according to an embodiment of the disclosure.
FIG. 2 is a flowchart of a method for determining a material constitutive model according to an embodiment of the disclosure.
FIG. 3A- FIG. 3D are schematic diagrams of reference curve selection and scaling according to an embodiment of the disclosure.
FIG. 4 is a flowchart of a method for determining a material constitutive model according to an embodiment of the disclosure.
FIG. 5 is a block diagram of an apparatus for determining a material constitutive model according to an embodiment of the disclosure.
FIG. 6 is a block diagram of an electronic device according to an embodiment of the disclosure.

**DETAILED DESCRIPTION**

In order to understand the above objectives, features and advantages of the disclosure more clearly, further description is made below to the technical solution of the disclosure. It should be noted that, embodiments of the disclosure and features in the embodiments may be combined with each other without conflict.

Multiple specific details are set forth in the following description to fully understand the disclosure, but the disclosure may be implemented in other ways than those described herein. Apparently, the embodiments in the description are merely a part of the embodiments of the disclosure, but not all of them.

A comfort level of a seat is often measured by a body pressure distribution, which is one of the important methods widely used in engineering. In seat development, in order to enhance comfort, different sponge foams may be tried, especially a formula may be changed and optimized to obtain sponge foams of different hardness, or even to obtain more complex nonlinear elastic characteristics. However, traditional development processes often produce physical seats to test the comfort effects of different sponge softness/hardness, and cannot achieve an effect evaluation at an initial design stage.

In recent years, with the development of simulation technology, body pressure distribution simulation technology has emerged, which can simulate a comprehensive effect of seat sponge foam, skin, and even the entire seat, and can accurately calculate the body pressure distribution. In the related art, the simulation of the body pressure distribution is mainly performed under a condition that a constitutive model of a sponge foam material is very certain, which means that the constitutive model of the sponge foam material used in the simulation needs to be defined by a testing curve of sponge foam specimens. In the simulation of the body pressure distribution, which mainly involves deformation in compression direction, it is usually necessary to input a stress-strain curve of the material specimens under a unidirectional compression to fit parameters of the material constitutive model (strain energy function). Thus, this causes that a construction process of the constitutive model may be time-consuming and labor-intensive, and it is difficult to construct the constitutive model of materials easily and quickly.

In this embodiment, a reference curve required by a material specimen is quickly obtained by determining the reference curve of the material specimen from stress-strain curves in an existing material database, scaling transformation is performed on the reference curve to obtain a stress-strain curve corresponding to the material specimen. This eliminates the tedious process of obtaining the stress-strain curve of the material specimen through compression tests, and the constitutive model of the material specimen may be directly determined according to the stress-strain curve corresponding to the material specimen, which greatly saves a time period for determining the stress-strain curve for constructing the constitutive model of the material specimen, saving both time and effort. At the same time, the constitutive model of the material specimen is efficiently constructed.

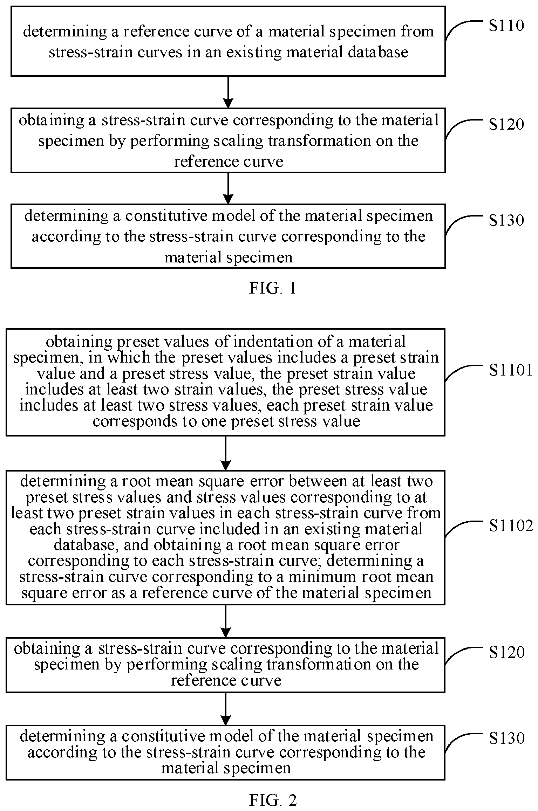

FIG. 1 is a flowchart of a method for determining a material constitutive model according to an embodiment of the disclosure. The method of this embodiment may be executed by an apparatus for determining a material constitutive model. The apparatus may be implemented in hardware/or software and may be configured in an electronic device, to implement the method for determining a material constitutive model described in any embodiment of the disclosure. As illustrated in FIG. 1, the method includes the following steps.

S 110, a reference curve of a material specimen is determined from stress-strain curves in an existing material database.

The reference curve is a stress-strain curve in the material database with a high degree of matching with the material specimen.

The existing material database is a database corresponding to sponge foam materials accumulated according to stress-strain curves of existing sponge materials. The existing material database contains stress-strain curves of various types of sponge materials.

The material specimen may be a sponge foam specimen, with a specimen side length of 380mm and a specimen thickness of 50mm.

The reference curve of the material specimen may be a stress-strain curve in the existing material database, which has the highest matching degree with stress values and strain values obtained for the material specimen under different indentation actions. The stress-strain curve has the highest matching degree is able to effectively describe a changing trend of certain key points corresponding to the material specimen.

The indentation of the material specimen may be implemented according to force values of F25, F40, and F65 of the 25%, 40%, and 65% indentation detected in the national standard GB 10807, so as to calculate the stress values and the strain values of the material specimen in the compression direction at the three levels of indentation.

S120, a stress-strain curve corresponding to the material specimen is obtained by performing scaling transformation on the reference curve.

The reference curve cannot fully represent a changing trend of the material specimen. Therefore, the scaling transformation may be performed on the reference curve, to fully fit a stress-strain curve that is able to represent a complete changing trend of the material specimen.

It should be noted that, in this embodiment, the number of scaling transformations performed on the reference curve is not limited. The number of transformations for the scaling transformation performed on the reference curve may be set based on the number of selected key points in the reference curve. That is, the number of transformations for the scaling transformation performed on the reference curve can be multiple or one.

S130, a constitutive model of the material specimen is determined according to the stress-strain curve corresponding to the material specimen.

The stress-strain curve corresponding to the material specimen may be fitted to obtain various parameters corresponding to the constitutive model of the material specimen, thereby constructing a new sponge foam material.

With the method for determining a material constitutive model provided in the embodiments, the reference curve required by the material specimen is quickly obtained by determining the reference curve of the material specimen from the stress-strain curves in the existing material database, and the scaling transformation is performed on the reference curve to obtain the stress-strain curve corresponding to the material specimen. This eliminates the tedious process of obtaining the stress-strain curve of the material specimen through compression tests, and the constitutive model of the material specimen may be directly determined according to the stress-strain curve corresponding to the material specimen, which greatly saves a time period for determining the stress-strain curve for constructing the constitutive model of the material specimen, saving both time and effort. At the same time, the constitutive model of the material specimen is efficiently constructed.

Optionally, determining the constitutive model of the material specimen according to the stress-strain curve corresponding to the material specimen includes:

obtaining a parameter of the constitutive model corresponding to the material specimen by inputting the stress-strain curve corresponding to the material specimen into a finite element analysis software for fitting; and

constructing the constitutive model of the material specimen according to the parameter of the constitutive model corresponding to the material specimen

The finite element software can perform finite element analysis in various aspects such as structure, fluid, fatigue, electromagnetic, etc. The finite element software may include: NASTRAN, ADINA, ANSYS, ABAQUS, MARC, MAGSOFT, COSMOS, etc.

By inputting the stress-strain curve corresponding to the material specimen into the finite element software for fitting, the parameters of the constitutive model corresponding to the material specimen can be determined based on an output of the finite element software, thereby accurately constructing the constitutive model corresponding to the material specimen.

FIG. 2 is a flowchart of a method for determining a material constitutive model according to an embodiment of the disclosure. This embodiment is based on the above embodiments, and one possible implementation of S 110 is as follows.

S1 101, preset values of indentation of the material specimen, the preset values include a preset strain value and a preset stress value, the preset strain value includes at least two strain values, the preset stress value includes at least two stress values, and each preset strain value corresponds to one preset stress value.

The preset values of the indentation of the material specimen are stress values and strain values obtained by performing different degrees of indentation on the material specimen. The stress values and the strain values in a compression direction of the above three degrees of indentation may be calculated according to the force values of the 25%, 40%, and 65% indentation detected in the GB 10807 standard. That is, the strain values corresponding to the material specimen may be: a strain value corresponding to the 25% indentation, a strain value corresponding to the 40% indentation, and a strain value corresponding to the 65% indentation. Correspondingly, the stress values corresponding to the material specimen may be: a stress value corresponding to the 25% indentation, a stress value corresponding to the 40% indentation, and a stress value corresponding to the 65% indentation.

For example, the material specimen is a sponge foam specimen (with a specimen side length of L=380mm and a specimen thickness of H=50mm), and the 25% indentation is performed, to make exemplary description.

A set force value for the indentation is F25 (N), thus, a corresponding stress value is as shown in equation (1) as follows:

$$\sigma_1 = \frac{F25}{L_1^2} \qquad (1)$$

In equation (1), $\sigma_1$ is the stress value corresponding to the 25% indentation, and $L_1$ is a side length of the compressed material specimen for the 25% indentation.

For the sponge foam material, the Poisson ratio may be approximated as zero. That is, a transverse normal strain of the sponge foam material is zero. Thus, a strain value corresponding to the material specimen may be a longitudinal strain value.

An indentation ratio $r_1$ = 25%, then a strain value corresponding to the 25% indentation is shown in equation (2) as follows:

$$\varepsilon_{y1} = r_1 = \frac{H - H_1}{H} = 0.25 \qquad (2)$$

In equation (2), $\varepsilon_{y1}$ is the strain value corresponding to the 25% indentation, and $H_1$ is a thickness of the indented material specimen for the 25% indentation.

Based on a principle of calculating the stress value and the strain value for the 25% indentation, a stress value and a strain value under the 40% indentation and a stress value and a strain value under the 65% indentation may be obtained.

The stress value $\sigma_2$ and the strain value $\varepsilon_{y2}$ under the 40% indentation may refer to the following equations (3) and (4):

$$\sigma_2 = \frac{F40}{L_2^2} \qquad (3)$$

$$\varepsilon_{y2} = r_2 = \frac{H - H_2}{H} = 0.4 \qquad (4)$$

In equation (3), $L_2$ is a side length of the compressed material specimen for the 40% indentation.

In equation (4), $H_2$ is a thickness of the indented material specimen for the 40% indentation.

The stress value $\sigma_3$ and the strain value $\varepsilon_{y3}$ under the 65% indentation may refer to the following equations (5) and (6):

$$\sigma_3 = \frac{F65}{L_3^2} \qquad (5)$$

$$\varepsilon_{y3} = r_3 = \frac{H - H_3}{H} = 0.65 \qquad (6)$$

In equation (5), $L_3$ is a side length of the compressed material specimen for the 65% indentation.

In equation (6), $H_3$ is a thickness of the indented material specimen for the 65% indentation.

S 1 102, from each stress-strain curve included in the existing material database, a root mean square error between stress values corresponding to at least two preset strain values in each stress-strain curve and at least two preset stress values is determined, a root mean square error corresponding to each stress-strain curve is obtained, and a stress-strain curve corresponding to a minimum root mean square error is determined as the reference curve of the material specimen.

The stress values corresponding to the preset strain values in the stress-strain curve are stress values corresponding to strain values that are the same as the preset strain values in the stress-strain curve, which belongs to data in existing material data. The preset stress values are stress values corresponding to the preset strain values obtained based on different indentation ratios.

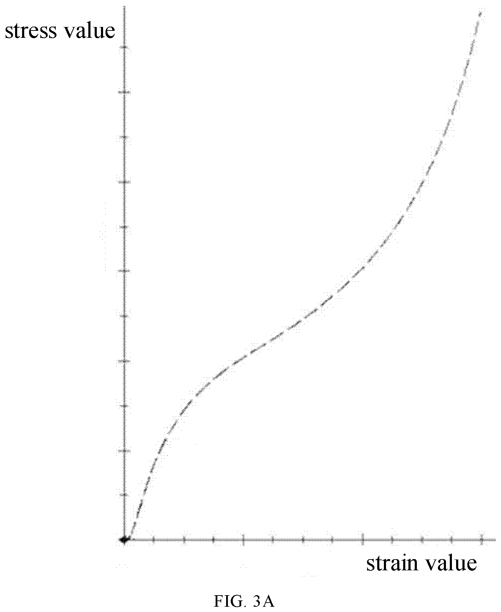

In detail, when the number of the preset strain values is at least two and the corresponding number of the preset stress values is at least two, the root mean square error between the stress values corresponding to respective preset strain values in each stress-strain curve and the preset stress values is calculated, and the root mean square error corresponding to each stress-strain curve is obtained. Then the stress-strain curve corresponding to the minimum root mean square error is determined as the reference curve of the material sample. The reference curve selected through S 1102 may refer to FIG. 3A.

For example, the preset strain values are three, and correspondingly, the preset stress values are three. Stress values corresponding to these three preset strain values are found from each stress-strain curve, and a root mean square error calculation is performed on the three obtained stress values and the preset three stress values to obtain the root mean square error corresponding to each stress-strain curve.

A method for calculating the mean square error may refer to in the following equation (7):

$$\omega = \sqrt{\frac{\sum_{i=1}^{3}\left(\sigma_i - \sigma_{Ci}\right)^2}{3-1}} \qquad (7)$$

In equation (7), $\sigma_i$ (i=1, 2, 3) are stress values corresponding to the 25%, 40%, and 65% indentation (corresponding to strain values $\varepsilon_{y1}$, $\varepsilon_{y2}$, $\varepsilon_{y3}$) of the material specimen, respectively, and $\sigma_{Ci}$ (i=1, 2, 3) are stress values corresponding to the strain values $\varepsilon_{y1}$, $\varepsilon_{y2}$, $\varepsilon_{y3}$ on the stress-strain curve included in the existing material database, respectively.

Optionally, the preset strain value includes a first strain value, a second strain value, and a third strain value. The preset stress value includes a first stress value, a second stress value, and a third stress value. The first strain value corresponds to the first stress value, the second strain value corresponds to the second stress value, and the third strain value corresponds to the third stress value.

The first strain value, the second strain value, and the third strain value may correspond to the strain values under different degrees of indentation, and the first stress value, the second stress value, respectively, and the third stress value may correspond to the stress values under different degrees of indentation, respectively. Therefore, the stress values under the 25%, 40%, and 65% indentation conditions calculated based on an indentation hardness and an indentation ratio defined in the GB 10807 standard are used as control points for the stress-strain curve of the material constitutive model, and the reference curve is obtained by screening the stress-strain curves in the existing material databases.

For example, the first strain value may correspond to the strain value $\varepsilon_{y3}$ in the above equation (6), the second strain value may correspond to the strain value $\varepsilon_{y1}$ in the above equation (2), the third strain value may correspond to the strain value $\varepsilon_{y2}$ in the above equation (4), the first stress value may correspond to the stress value $\sigma_3$ in the above equation (5), the second stress value may correspond to the stress value $\sigma_1$ in the above equation (1), and the third stress value can correspond to the stress value $\sigma_2$ in the above equation (3).

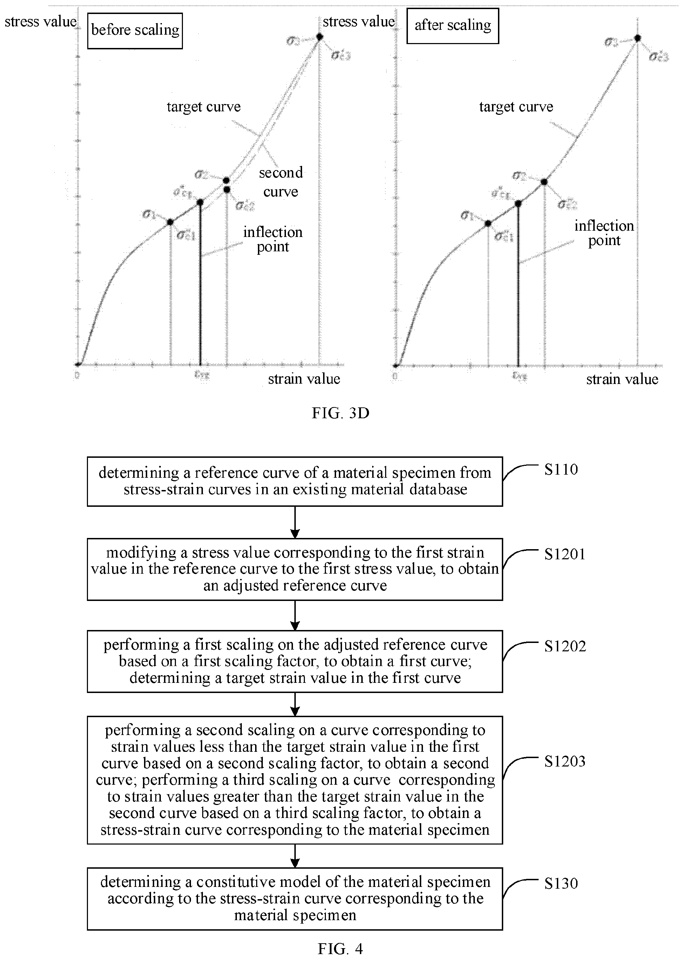

FIG. 4 is a flowchart of a method for determining a material constitutive model according to an embodiment of the disclosure. This embodiment is based on the above embodiments, and one possible implementation of S 120 is as follows.

S 1201, a stress value corresponding to the first strain value in the reference curve is modified to the first stress value to obtain an adjusted reference curve.

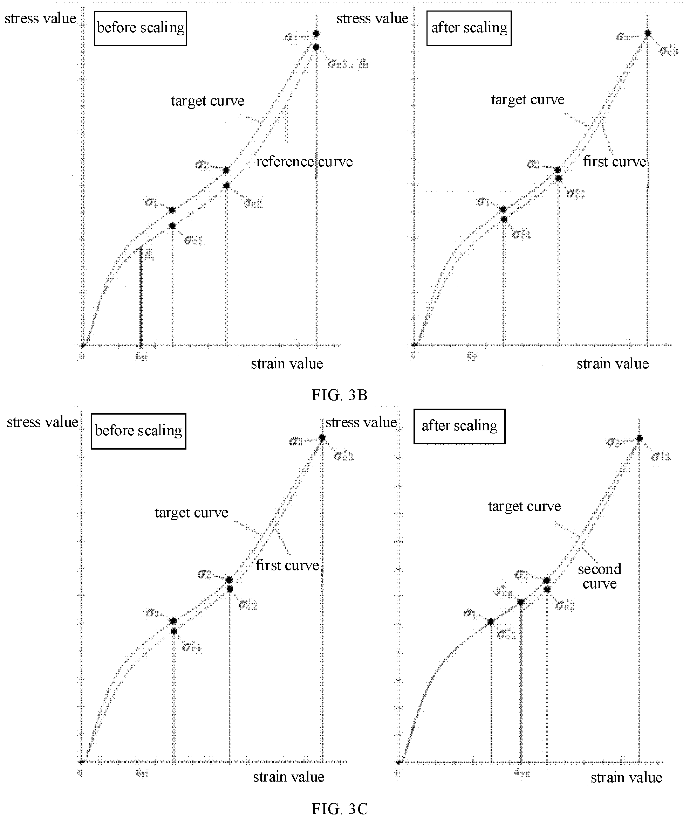

The reference curve is used as a baseline, and scaling technique is used to adjust the reference curve to obtain a new material curve, i.e., the stress-strain curve corresponding to the material specimen. A schematic diagram of the reference curve may refer to the left side of FIG. 3B.

An overall scaling may be performed according a position of the 65% indentation (corresponding to the strain value $\varepsilon_{y3}$), so that a stress value $\sigma_{c3}$ at that point on the curve is equal to a stress value calculated by an indentation force of the 65% indentation (corresponding to the strain value $\varepsilon_{y3}$) of the specimen.

S1202, a first scaling is performed on the adjusted reference curve based on a first scaling factor, to obtain a first curve, a target strain value in the first curve is determined.

The target strain value is used to indicate a change trend of the first curve.

On the basis of the new material curve, the new material curve may be discretized into n points, and the discretized points may be scaled based on the first scaling factor to obtain the first curve. A schematic diagram of the first curve may refer to the right side of FIG. 3B.

It should be noted that, in order to visually observe the scaling process from the reference curve to the stress-strain curve, in this embodiment, the schematic diagrams of the stress-strain curve and the reference curve at each scaling stage are displayed in the same coordinate during the scaling process.

The target strain value and its corresponding target strain value is an inflection point on the reference curve, which can be found through numerical algorithms.

Optionally, before performing the first scaling on the adjusted reference curve based on the first scaling factor, the method according to the embodiment further includes:

obtaining a stress value corresponding to a strain value in the adjusted reference curve;

determining the first scaling factor based on the strain value, the stress value corresponding to the strain value, the first strain value, and the first stress value.

The determination of the first scaling factor may refer to the equation (8) as follows:

$$\sigma_{Ci}^{'} = \sigma_{Ci} \cdot \frac{\sigma_3}{\sigma_{C3}\varepsilon_{y3}} \cdot \varepsilon_{yi} \qquad (8)$$

In equation (8), $\sigma_{Ci}$ is a stress value corresponding to one of other strain values on the reference curve, and $\sigma_{Ci}^{'}$ is a stress value obtained by performing the first scaling on the reference curve based on the first scaling factor.

The first scaling factor in this embodiment is to scale the reference curve as a whole, so that the overall trend of the reference curve corresponds to the first stress value corresponding to the first strain value, achieving the overall trend adjustment of the reference curve.

S 1203, a second scaling is performed on a curve corresponding to strain values less than the target strain value in the first curve based on a second scaling factor to obtain a second curve, a third scaling is performed on a curve corresponding to strain values greater than the target strain value in the second curve based on a third scaling factor, to obtain the stress-strain curve corresponding to the material specimen.

The second scaling is performed on the curve corresponding to strain values less than the target strain value on the basis of the first curve. The target strain value is a critical partition value of a change trend of the first curve, thus different scaling factors may be used to perform scaling transformation on the curve corresponding to strain values less than the target strain value and the curve corresponding to the strain values greater than the target strain value, to adjust the change trend of the first curve.

A schematic diagram of adjusting the first curve to the second curve may refer to FIG. 3C. The left side of FIG. 3C is a schematic diagram of the first curve, and the right side of FIG. 3C is a schematic diagram of the second curve. A schematic diagram of adjusting the second curve to the third curve may refer to FIG. 3D. The left side of FIG. 3D is a schematic diagram of the second curve, and the right side of FIG. 3D is a schematic diagram of the third curve.

Optionally, before performing the second scaling on the curve corresponding to strain values less than the target strain value in the first curve based on the second scaling factor, the method according to the embodiment further includes:

obtaining a stress value corresponding to a strain value in the first curve;
determining the second scaling factor based on the second strain value, the second stress value, the strain value in the first curve, and the stress value corresponding to the strain value in the first curve.

The determination of the second scaling factor may refer to the equation (9) as follows:

$$\sigma_{Ci}^{''} = \sigma_{Ci}^{'} \cdot \frac{\sigma_3}{\sigma_{C1}^{'}\varepsilon_{y1}} \cdot \varepsilon_{yi} \qquad (9)$$

In equation (9), $\sigma_{Ci}^{'}$ is a stress value corresponding to a strain value less than the target strain value on the first curve, and $\sigma_{Ci}^{''}$ is a stress value corresponding to the strain value less than the target strain value after performing the first scaling on the first curve according to the second scaling factor.

The second scaling factor in this embodiment is to scale the stress value corresponding to the strain value less than the target strain value on the first curve. A deformation trend of the material changes from an elastic deformation to a plastic deformation during a compression process (and a transverse strain is close to zero). Thus the curve corresponding to strain values less than the target strain value corresponds to the elastic deformation, that is, the stress value increases proportionally to the strain value, and the corresponding curve is a convex curve. Thus, the second scaling factor is used to scale the curve corresponding to strain values less than the target strain value as a whole, so as to adaptively scale the convex curve in the first curve.

Optionally, before performing the third scaling on the curve corresponding to strain values greater than the target strain value in the second curve based on the third scaling factor, the method of this embodiment further includes: determining the third scaling factor based on the strain value in the first curve, the stress value corresponding to the strain value in the first curve, the third strain value, the third stress value, the second strain value, and the second stress value

The determination of the third scaling factor may refer to the equation (10) as follows:

$$\sigma_{Ci}^{''} = \sigma_{Ci}^{'} \cdot \frac{(\varepsilon_{yi} - \varepsilon_{y3})}{(\varepsilon_{y2} - \varepsilon_{y3})} \cdot \frac{(\sigma_2 - \sigma_3)}{(\sigma_{C2}^{'} - \sigma_3)} \qquad (10)$$

The third scaling factor in this embodiment is to scale the stress values corresponding to strain values greater than the target strain value on the second curve (or the first curve). A deformation trend of the material changes from the elastic deformation to the plastic deformation during the compression process (and the transverse strain is close to zero), thus the curve corresponding to strain values greater than the target strain value corresponds to the plastic deformation, that is, the stress value increases positively with the strain value, and the corresponding curve is a concave curve. Thus, the third scaling factor is used to scale the curve corresponding to strain values greater than the target strain value as a whole, so as to adaptively scale the convex curve in the second curve (or the first curve) to obtain a stress-strain curve with a high fitting degree.

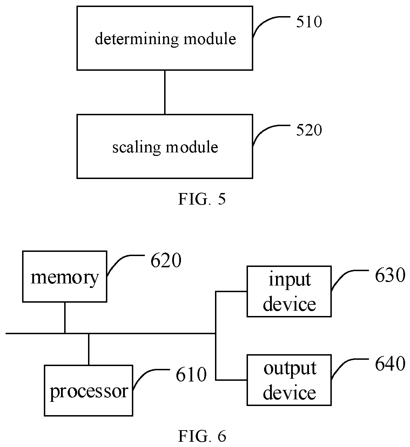

FIG. 5 is a block diagram of an apparatus for determining a material constitutive model according to an embodiment of the disclosure. The apparatus is configured in an electronic device to implement the method for determining a material constitutive model described in any embodiment of the disclosure. The apparatus includes the following:

a determining module 510, configured to determine a reference curve of a material specimen from stress-strain curves in an existing material database; and
a scaling module 520, configured to obtain a stress-strain curve corresponding to the material specimen by performing scaling transformation on the reference curve.

The determining module 510 is further configured to determine a constitutive model of the material specimen according to the stress-strain curve corresponding to the material specimen.

Optionally, the determining module 510 is configured to:

obtain preset values of indentation of the material specimen, in which the preset values include a preset strain value and a preset stress value, the preset strain value includes at least two strain values, the preset stress value includes at least two stress values, each preset strain value corresponds to one preset stress value;
determine a root mean square error between at least two preset stress values and stress values corresponding to at least two preset strain values in each stress-strain curve from each stress-strain curve included in the existing material database, and obtaining a root mean square error corresponding to each stress-strain curve; and

determine a stress-strain curve corresponding to a minimum root mean square error as the reference curve of the material specimen.

Optionally, the preset strain value includes a first strain value, a second strain value, and a third strain value, the preset stress value includes a first stress value, a second stress value, and a third stress value, the first strain value corresponds to the first stress value, the second strain value corresponds to the second stress value, and the third strain value corresponds to the third stress value.

Optionally, the scaling module 520 includes: a modifying unit, a first scaling unit, a determining unit, a second scaling unit, and a third scaling unit.

The modifying unit is configured to modify a stress value corresponding to the first strain value in the reference curve to the first stress value, to obtain an adjusted reference curve.

The first scaling unit is configured to perform a first scaling on the adjusted reference curve based on a first scaling factor, to obtain a first curve.

The determining unit is configured to determine a target strain value in the first curve, in which the target strain value is used to indicate a change trend of the first curve.

The second scaling unit is configured to perform a second scaling on a curve corresponding to strain values less than the target strain value in the first curve based on a second scaling factor, to obtain a second curve.

The third scaling unit is configured to perform a third scaling on a curve corresponding to strain values greater than the target strain value in the second curve based on a third scaling factor, to obtain the stress-strain curve corresponding to the material specimen.

Optionally, the apparatus according to an embodiment further includes an obtaining module.

The obtaining module is configured to obtain a stress value corresponding to a strain value in the adjusted reference curve.

The determining module 510 is further configured to determine the first scaling factor based on the strain value, the stress value corresponding to the strain value, the first strain value, and the first stress value.

Optionally, the obtaining module is further configured to obtain a stress value corresponding to a strain value in the first curve; and
the determining module 510 is further configured to determine the second scaling factor based on the second strain value, the second stress value, the strain value in the first curve, and the stress value corresponding to the strain value in the first curve.

Optionally, the determining module 510 is further configured to determine the third scaling factor based on the strain value in the first curve, the stress value corresponding to the strain value in the first curve, the third strain value, the third stress value, the second strain value, and the second stress value.

Optionally, the determining module 510 is configured to:

obtain a parameter of the constitutive model corresponding to the material specimen by inputting the stress-strain curve corresponding to the material specimen into a finite element analysis software for fitting; and
construct the constitutive model of the material specimen according to the parameter of the constitutive model corresponding to the material specimen.

With the apparatus for determining a material constitutive model according to the embodiments of the disclosure, the reference curve required by the material specimen is quickly obtained by determining the reference curve of the material specimen from the stress-strain curves in the existing material database, and the scaling transformation is performed on the reference curve to obtain the stress-strain curve corresponding to the material specimen. This eliminates the tedious process of obtaining the stress-strain curve of the material specimen through compression tests, and the constitutive model of the material specimen may be directly determined according to the stress-strain curve corresponding to the material specimen, which greatly saves a time period for determining the stress-strain curve for constructing the constitutive model of the material specimen, saving both time and effort. At the same time, the constitutive model of the material specimen is efficiently constructed.

The apparatus for determining a material constitutive model provided by the embodiments of the disclosure may execute the method for determining a material constitutive model provided by any of the embodiments of the disclosure, and has corresponding functional modules and beneficial effects for implementing the method.

FIG. 6 is a block diagram illustrating an electronic device according to embodiments of the disclosure. As illustrated in FIG. 6, the electronic device includes a processor 610, a memory 620, an input device 630 and an output device 640. There may be one or more processors 610 in the electronic device, and FIG. 6 takes one processor 610 as an example. The processor 610, the memory 620, the input device 630 and the output device 640 in the electronic device may be connected via a bus or in other means, and FIG. 6 takes the connection via the bus as an example.

As a computer-readable storage medium, the memory 620 may be configured to store software programs, computer executable programs and modules, such as program instructions/modules corresponding to the method for determining a material constitutive model according to the embodiments of the disclosure. The processor 610 executes various functional applications and data processing of the electronic device by operating the software programs, instructions and modules stored in the memory 620, that is, implements the method for determining a material constitutive model according to the embodiments of the disclosure.

The memory 620 may include a program storage region and a data storage region. The program storage region may store an application required by an operating system or at least one function. The data storage region may store data created based on usage of a terminal. In addition, the memory 620 may include a high-speed random access memory, and may further include a non-transitory memory, such as at least one disk memory device, a flash memory device, or other non-transitory solid-state memory device. In some embodiments, the memory 620 may further include memories remotely located to the processor 610, and these remote memories may be connected to the electronic device via a network. Examples of the above network include, but are not limited to, an Internet, an intranet, a local area network, a mobile communication network or combinations thereof.

The input device 630 may be configured to receive inputted digital or character information, and generate a key signal input related to user setting and function control of the electronic device, such as a keyboard, a mouse. The output device 640 may include a display device such as a screen.

Embodiments of the disclosure further provide a storage medium including computer executable instructions. The computer executable instructions are configured to implement the method for determining a material constitutive model according to the embodiments of the disclosure when executed by a computer processor.

Certainly, the computer executable instructions of the storage medium according to embodiments of the disclosure are not limited to the above-mentioned method operations, and may also execute related operations in the method for determining a material constitutive model according to any of embodiments of the disclosure.

From the above description of embodiments, it may be clearly understood by those skilled in the art that the disclosure may be implemented by software and necessary general hardware, and may also be realized by hardware, but the former is a better embodiment in multiple cases. Based on this understanding, the technical solution of the disclosure may be embodied in the form of software products in essence or in the part that contributes to related technologies. The computer software product may be stored in a computer-readable storage medium. A nontemporary computer-readable medium may include: any entity or device capable of carrying computer program codes, a recording medium, a USB flash drive, a portable hard drive, a magnetic disk, an optical disc, a computer memory, a read only memory (ROM), a random access memory (RAM), an electric carrier signal, a telecommunication signal, and software distribution media, etc., and includes several instructions to enable a computer device (which may be a personal computer, a server, or a network device, etc.) to execute the method according to the embodiments of the disclosure.

It is worth noting that, each unit and module included in embodiments of the above query device is only divided based on a functional logic, but it is not limited to the above division, as long as a corresponding function may be realized. In addition, a detailed name of each functional unit is merely for the convenience of distinguishing each other, and is not used to limit a protection scope of the disclosure.

It should be noted that, relational terms such as "first" and "second" in the description are merely used to distinguish one entity or operation from another entity or operation, and do not necessarily require or imply that there is any such actual relationship or order between these entities or operations. However, terms "including", "comprising" or any other variant thereof are intended to cover a non-exclusive inclusion, such that procedures, methods, products or devices including a series of elements not only include those elements, but also include other elements not explicitly listed, or further includes elements inherent in such procedures, methods, products, or devices. Without more limitations, an element limited by a sentence "includes one... "does not exclude that there are additional identical elements in the procedures, methods, products, or devices that includes the element.

The above is merely detailed implementations of the disclosure, such that those skilled in the art may understand or implement the disclosure. Multiple modifications to these embodiments may be obvious to those skilled in the art, and the general principles defined herein may be implemented in other embodiments without departing from the scope of the disclosure. Therefore, the disclosure may not be limited to the embodiments described herein, but may conform to a broadest scope consistent with the principles and novel features disclosed herein.

## Claims

1. A method for determining a material constitutive model, comprising:

   determining a reference curve of a material specimen from stress-strain curves in an existing material database;
   obtaining a stress-strain curve corresponding to the material specimen by performing scaling transformation on the reference curve; and

determining a constitutive model of the material specimen according to the stress-strain curve corresponding to the material specimen.

2. The method of claim 1, wherein determining the reference curve of the material specimen from the stress-strain curves in the existing material database comprises:

obtaining preset values of indentation of the material specimen, wherein the preset values comprise a preset strain value and a preset stress value, the preset strain value comprises at least two strain values, the preset stress value comprises at least two stress values, each preset strain value corresponds to one preset stress value; determining a root mean square error between at least two preset stress values and stress values corresponding to at least two preset strain values in each stress-strain curve from each stress-strain curve comprised in the existing material database, and obtaining a root mean square error corresponding to each stress-strain curve; and determining a stress-strain curve corresponding to a minimum root mean square error as the reference curve of the material specimen.

3. The method of claim 2, wherein the preset strain value comprises a first strain value, a second strain value, and a third strain value, the preset stress value comprises a first stress value, a second stress value, and a third stress value, the first strain value corresponds to the first stress value, the second strain value corresponds to the second stress value, and the third strain value corresponds to the third stress value.

4. The method of claim 3, wherein obtaining the stress-strain curve corresponding to the material specimen by performing scaling transformation on the reference curve comprises:

modifying a stress value corresponding to the first strain value in the reference curve to the first stress value, to obtain an adjusted reference curve; performing a first scaling on the adjusted reference curve based on a first scaling factor, to obtain a first curve; determining a target strain value in the first curve, wherein the target strain value is used to indicate a change trend of the first curve; performing a second scaling on a curve corresponding to strain values less than the target strain value in the first curve based on a second scaling factor, to obtain a second curve; and performing a third scaling on a curve corresponding to strain values greater than the target strain value in the second curve based on a third scaling factor, to obtain the stress-strain curve corresponding to the material specimen.

5. The method of claim 4, wherein, before performing the first scaling on the adjusted reference curve based on the first scaling factor, the method further comprises:

obtaining a stress value corresponding to a strain value in the adjusted reference curve; and determining the first scaling factor based on the strain value, the stress value corresponding to the strain value, the first strain value, and the first stress value.

6. The method of claim 4 or 5, wherein, before performing the second scaling on the curve corresponding to strain values less than the target strain value in the first curve based on the second scaling factor, the method further comprises:

obtaining a stress value corresponding to a strain value in the first curve; and determining the second scaling factor based on the second strain value, the second stress value, the strain value in the first curve, and the stress value corresponding to the strain value in the first curve.

7. The method of claim 6, wherein, before performing the third scaling on the curve corresponding to strain values greater than the target strain value in the second curve based on the third scaling factor, the method further comprises: determining the third scaling factor based on the strain value in the first curve, the stress value corresponding to the strain value in the first curve, the third strain value, the third stress value, the second strain value, and the second stress value.

8. The method of any of claims 1 to 7, wherein determining the constitutive model of the material specimen according to the stress-strain curve corresponding to the material specimen comprises:

obtaining a parameter of the constitutive model corresponding to the material specimen by inputting the stress-strain curve corresponding to the material specimen into a finite element analysis software for fitting; and constructing the constitutive model of the material specimen according to the parameter of the constitutive model corresponding to the material specimen.

9. An apparatus for determining a material constitutive model, comprising:

a determining module, configured to determine a reference curve of a material specimen from stress-strain curves in an existing material database; and
a scaling module, configured to obtain a stress-strain curve corresponding to the material specimen by performing scaling transformation on the reference curve;
wherein the determining module is further configured to determine a constitutive model of the material specimen according to the stress-strain curve corresponding to the material specimen.

10. The apparatus of claim 9, wherein the determining module is configured to:

obtain preset values of indentation of the material specimen, wherein the preset values comprise a preset strain value and a preset stress value, the preset strain value comprises at least two strain values, the preset stress value comprises at least two stress values, each preset strain value corresponds to one preset stress value;
determine a root mean square error between at least two preset stress values and stress values corresponding to at least two preset strain values in each stress-strain curve from each stress-strain curve comprised in the existing material database, and obtaining a root mean square error corresponding to each stress-strain curve; and
determine a stress-strain curve corresponding to a minimum root mean square error as the reference curve of the material specimen.

11. The apparatus of claim 10, wherein the preset strain value comprises a first strain value, a second strain value, and a third strain value, the preset stress value comprises a first stress value, a second stress value, and a third stress value, the first strain value corresponds to the first stress value, the second strain value corresponds to the second stress value, and the third strain value corresponds to the third stress value.

12. The apparatus of claim 11, wherein the scaling module comprises:

a modifying unit, configured to modify a stress value corresponding to the first strain value in the reference curve to the first stress value, to obtain an adjusted reference curve;
a first scaling unit, configured to perform a first scaling on the adjusted reference curve based on a first scaling factor, to obtain a first curve;
a determining unit, configured to determine a target strain value in the first curve, wherein the target strain value is used to indicate a change trend of the first curve;
a second scaling unit, configured to perform a second scaling on a curve corresponding to strain values less than the target strain value in the first curve based on a second scaling factor, to obtain a second curve; and
a third scaling unit, configured to perform a third scaling on a curve corresponding to strain values greater than the target strain value in the second curve based on a third scaling factor, to obtain the stress-strain curve corresponding to the material specimen.

13. The apparatus of claim 12, further comprising:

an obtaining module, configured to obtain a stress value corresponding to a strain value in the adjusted reference curve;
wherein the determining module is further configured to determine the first scaling factor based on the strain value, the stress value corresponding to the strain value, the first strain value, and the first stress value.

14. The apparatus of claim 12 or 13 wherein the obtaining module is further configured to obtain a stress value corresponding to a strain value in the first curve; and
the determining module is further configured to determine the second scaling factor based on the second strain value, the second stress value, the strain value in the first curve, and the stress value corresponding to the strain value in the first curve.

**15.** The apparatus of claim 14, wherein the determining module is further configured to determine the third scaling factor based on the strain value in the first curve, the stress value corresponding to the strain value in the first curve, the third strain value, the third stress value, the second strain value, and the second stress value.

**16.** The apparatus of any of claims 9 to 15, wherein the determining module is configured to:

obtain a parameter of the constitutive model corresponding to the material specimen by inputting the stress-strain curve corresponding to the material specimen into a finite element analysis software for fitting; and construct the constitutive model of the material specimen according to the parameter of the constitutive model corresponding to the material specimen.

**17.** An electronic device, comprising:

one or more processors; and
a storage device, configured to store one or more programs;
wherein when the one or more programs are executed by the one or more processors, the one or more processors are caused to perform the method for determining a material constitutive model of any of claims 1 to 8.

**18.** A computer-readable storage medium having a computer program stored thereon that, when executed by a processor, performs the method for determining a material constitutive model of any of claims 1 to 8.

determining a reference curve of a material specimen from stress-strain curves in an existing material database ⎯ S110

↓

obtaining a stress-strain curve corresponding to the material specimen by performing scaling transformation on the reference curve ⎯ S120

↓

determining a constitutive model of the material specimen according to the stress-strain curve corresponding to the material specimen ⎯ S130

FIG. 1

obtaining preset values of indentation of a material specimen, in which the preset values includes a preset strain value and a preset stress value, the preset strain value includes at least two strain values, the preset stress value includes at least two stress values, each preset strain value corresponds to one preset stress value ⎯ S1101

↓

determining a root mean square error between at least two preset stress values and stress values corresponding to at least two preset strain values in each stress-strain curve from each stress-strain curve included in an existing material database, and obtaining a root mean square error corresponding to each stress-strain curve; determining a stress-strain curve corresponding to a minimum root mean square error as a reference curve of the material specimen ⎯ S1102

↓

obtaining a stress-strain curve corresponding to the material specimen by performing scaling transformation on the reference curve ⎯ S120

↓

determining a constitutive model of the material specimen according to the stress-strain curve corresponding to the material specimen ⎯ S130

FIG. 2

FIG. 3A

FIG. 3B

FIG. 3C

FIG. 3D

determining a reference curve of a material specimen from stress-strain curves in an existing material database — S110

modifying a stress value corresponding to the first strain value in the reference curve to the first stress value, to obtain an adjusted reference curve — S1201

performing a first scaling on the adjusted reference curve based on a first scaling factor, to obtain a first curve; determining a target strain value in the first curve — S1202

performing a second scaling on a curve corresponding to strain values less than the target strain value in the first curve based on a second scaling factor, to obtain a second curve; performing a third scaling on a curve corresponding to strain values greater than the target strain value in the second curve based on a third scaling factor, to obtain a stress-strain curve corresponding to the material specimen — S1203

determining a constitutive model of the material specimen according to the stress-strain curve corresponding to the material specimen — S130

FIG. 4

determining module — 510

scaling module — 520

FIG. 5

memory — 620

input device — 630

processor — 610

output device — 640

FIG. 6

## INTERNATIONAL SEARCH REPORT

| | International application No. |
|---|---|
| | **PCT/CN2022/111547** |

**A.    CLASSIFICATION OF SUBJECT MATTER**

G06F 30/23(2020.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNTXT; ENTXTC; CNABS; WPABSC; VCN; DWPI; CJFD; IPCOM; EPONPL: 本构模型, 本构方程, 本构曲线, 曲线, 缩放, 放缩, 变换, 变形, 修改, 调整, 基准, 匹配, 相似, 材料, 试样, 海绵, 发泡, 材料库, 材料数据库; constitutive model, constitutive equation, constitutive curve, curve, scale, modify, amend, adjust, benchmark, match, similarity, material, sample, sponge, foam, material library, material database

**C.    DOCUMENTS CONSIDERED TO BE RELEVANT**

| Category* | Citation of document, with indication, where appropriate, of the relevant passages | Relevant to claim No. |
|---|---|---|
| X | CN 110929438 A (HBIS GROUP HANSTEEL CO. et al.) 27 March 2020 (2020-03-27) description, paragraphs 12-17 and 34 | 1, 8, 9, 16-18 |
| A | US 7308387 B1 (LIVERMORE SOFTWARE TECH CORP.) 11 December 2007 (2007-12-11) entire document | 1-18 |
| A | US 2017329879 A1 (MULTIMECHANICS INC.) 16 November 2017 (2017-11-16) entire document | 1-18 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 September 2022** | **20 October 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## EP 4 386 613 A1

**INTERNATIONAL SEARCH REPORT**
Information on patent family members

International application No.

**PCT/CN2022/111547**

| Patent document cited in search report | | | Publication date (day/month/year) | Patent family member(s) | | | Publication date (day/month/year) |
|---|---|---|---|---|---|---|---|
| CN | 110929438 | A | 27 March 2020 | None | | | |
| US | 7308387 | B1 | 11 December 2007 | None | | | |
| US | 2017329879 | A1 | 16 November 2017 | CN | 109074415 | A | 21 December 2018 |
| | | | | EP | 3455752 | A1 | 20 March 2019 |
| | | | | WO | 2017196908 | A1 | 16 November 2017 |
| | | | | JP | 2019522263 | A | 08 August 2019 |
| | | | | JP | 7030064 | B2 | 04 March 2022 |
| | | | | JP | 2019522263 | W | 08 August 2019 |
| | | | | EP | 3455752 | A4 | 20 March 2019 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110925621